# EUROPÄISCHE PATENTSCHRIFT

(11) **EP 3 615 319 B1**
(45) Veröffentlichungstag und Bekanntmachung des Hinweises auf die Patenterteilung: **07.04.2021**
(21) Anmeldenummer: 18703565.4
(22) Anmeldetag: 05.02.2018
(51) Int. Cl.: B29C 43/28, B29C 43/52, F16G 1/10, F16G 5/08, F16G 1/28, B29D 29/00, F16G 5/20, B29K 105/08, B29K 7/00, B29K 21/00, B29K 105/24, B29L 29/00

(54) **VERFAHREN ZUR HERSTELLUNG EINES FLÄCHIGEN GEWEBEVERBUNDMATERIALS**
METHOD FOR PRODUCING A FLAT COMPOSITE FABRIC MATERIAL
PROCÉDÉ POUR LA FABRICATION D'UN MATÉRIAU DE TISSU COMPOSITE PLAT

(30) Priorität: 24.04.2017 DE 102017206844
(43) Veröffentlichungstag der Anmeldung: 04.03.2020
(73) Patentinhaber: ContiTech Antriebssysteme GmbH, 30165 Hannover (DE)
(72) Erfinder: MAHNKEN, Claus-Lüder, 27367 Ahausen (DE); KANZOW, Henning, 30900 Wedemark (DE); OBERT, Markus, 30457 Hannover (DE); WELL, Michael, 38159 Vechelde (DE)
(74) Vertreter: Continental Corporation
(86) Internationale Anmeldenummer: PCT/EP2018/052725
(87) Internationale Veröffentlichungsnummer: WO 2018/197060

(56) Entgegenhaltungen:
- DE-A1- 3 149 503
- DE-A1- 3 235 740
- GB-A- 554 252
- US-A- 3 247 038

## Beschreibung

Die Erfindung betrifft ein Verfahren zur Herstellung eines flächigen Gewebeverbundmaterials in Form eines gummierten oder mit einer Polymerpräparation versehenen Gewebes zur Belegung von Antriebsriemen, wobei das Gewebeverbundmaterial ein in einer Matrix aus elastomerem Material eingebundenes Textil aufweist,dadurch gekennzeichnet, dassdas Textil bzw. die Gewebelage und das elastomere Material in einen Spalt zwischen einem Band und einem zylindrischen Formrad eingebracht und zwischen Band und Formrad bei einer Temperatur unterhalb der Vulkanisationstemperatur zu einem Verbundmaterial geformt werden, wobei das Band das Formrad über einen Umschlingungswinkel unter einem Druck von 2 bis 6 bar umschlingt und wobei das elastomere Material als Platte zwischen Band und zylindrischem Formrad eingebracht wird, wobei die Platte einseitig oder beidseitig des Textils oder der Gewebelage eingebracht wird.

Als Matrix wird üblicherweise das Material in Verbundwerkstoffen bezeichnet, in das andere Bestandteile eingebettet sind. Als "Gummieren" bezeichnet man im Fachgebiet üblicherweise das Einbinden von Textilien in Kautschukmischungen oder Polymerpräparationen. Der Begriff "Belegung" bezeichnet hier das Aufbringen von Gewebeverbundmaterial auf die Oberfläche eines Gegenstands, etwa eines Antriebsriemens, und die entsprechend geeignete Verbindung des Gewebeverbundmaterials mit der Gegenstandsoberfläche. Der Begriff "Mischung" wird hier als Bezeichnung von beliebigen Mischungen aus bzw. mit Kautschuk und/oder anderen Polymeren verwendet.

Antriebsriemen, also etwa Keilriemen, Vielkeilriemen oder Zahnriemen werden oft auf ihren Außenseiten mit Gewebelagen ausgerüstet, die im Betrieb der Riemen die Reibung- und Verschleißverhältnisse zwischen Antriebsriemen und Antriebsriemenscheiben deutlich verbessern. Solche Gewebe werden üblicherweise zur Verbesserung der Haftung, des Verschleißschutzes und der Öldichtigkeit mit verschiedenen Gummi- oder sonstigen Polymerpräparationen ausgerüstet.

Zur Herstellung dieser Gewebe kommen die verschiedensten Verfahren zur Anwendung.

Eine Herstellungsmöglichkeit besteht darin, das Gewebe in einer Kautschuklösung/Kautschukmischungslösung oder Haftmittellösung zu tauchen. Hierzu muss jedoch erst die entsprechende Lösung relativ aufwendig hergestellt und nachträglich erhebliche Energie für das Trocknen der Gewebe aufgewendet werden. Zusätzlich ist die Bearbeitungsmenge durch die Lösungsmenge limitiert.

Auch ist eine relativ aufwendige Abgasreinigung erforderlich, da die Lösungen mit einem Lösungsmittel versehen sind. Darüber hinaus hinterlässt das Verdampfen der Lösungsmittel Poren im Textilverbund bzw. im Verbundmaterial, so dass die Gefahr besteht, dass das Gewebe nicht komplett verfüllt wird. Es ist auch nicht immer sichergestellt, dass alle Teile des Lösemittels aus dem matrixbildenden Material verdampfen und nicht etwa in der Matrix verbleiben.

Prozessbedingt können dabei Textilien mit hoher Längsdehnbarkeit nicht verwendet werden. Darunter versteht man solche Textilien, die mehr als 50% Dehnung bei einer Spannung von 100 N aufweisen, gemessen mit einem Textilstreifen mit einer Breite von 5 cm. Textilien mit hoher Längsdehnbarkeit, auch Längsstretchtextilien genannt, werden z.B. dadurch hergestellt, dass eine Texturierung der Kettfäden erfolgt, etwa im Falschdrahtverfahren, oder dass elastische Fäden verwendet werden.

Darüberhinaus steht bei den oben aufgezählten Verfahren immer nur ein Material pro Arbeitsgang als Matrixbildner für das Gewebe/das Verbundmaterial zur Verfügung.

Ähnliche Nachteile ergeben sich sowohl beim Aufstreichen, bei dem üblicherweise eine Polymer- oder Kautschukpaste bzw. ein Paste auf Basis von Polymer- oder Kautschukmischungen ausgestrichen wird, als auch beim Kalandrieren. Als Kalandrieren bezeichnet man einen Prozess, bei dem mit Hilfe einer Walze eine Mischungsplatte oder Mischungsmatte in ein anderes Flächengebilde gedrückt oder mit letzterem verbunden wird. Im hier vorliegenden Fall der Herstellung von Gewebeverbundmaterialien wäre dies eine Mischungsplatte, die mit einer Walze in die Gewebelage eingearbeitet wird. Beim Kalandrieren kann es nachteiliger Weise vorkommen, dass durch die oberflächliche Auflage der Mischnungsplatte das Textil bzw. die Gewebelage nicht gut genug verfüllt wird oder dass die Eindringtiefe der Mischung in die Gewebelage zu gering ist, abhängig natürlich von der Viskosität der Mischung.

Eine weitere Möglichkeit besteht im Herstellen durch das so genannte "Friktionieren", bei dem eine Kautschuk- oder Polymermischung durch mechanisches Walzen erwärmt, letztlich heiß geknetet und mit Hilfe einer Walze in das Textil eingetrieben wird. Dabei ist nachteiliger Weise die Auftragsmenge limitiert und es kann auch nur ein Material pro Arbeitsgang aufgebracht werden. Auch hier ist es möglich, dass das Matrix-Material nur in die oberste Textilschicht eingetrieben wird und also die Verfüllung Mängel aufweist. Zudem wird das Textil bzw. die Gewebelage natürlich stark durch Zugkräfte belastet, so dass auch hier Textilien mit hoher Längsdehnbarkeit kaum zum Einsatz kommen können.

Für die Erfindung bestand also die Aufgabe ein Verfahren zur Herstellung eines Gewebeverbundmaterials bereitzustellen, insbesondere eines Gewebes zur Belegung von Antriebsriemen, welches die genannten Nachteile nicht aufweist, eine porenfreie und lösemittelfreie Matrix für das Verbundmaterial sicherstellt, welches mehrere Materialien in einem Arbeitsgang einbringen lässt, Lösungsmittel reduziert und welches den Herstellungsprozess in Bezug auf maschinellen und personellen Aufwand vereinfacht.

Gelöst wird diese Aufgabe durch die Merkmale des Hauptanspruchs. Weitere vorteilhafte Ausbildungen sind in den Unteransprüchen offenbart. Ebenfalls ist ein Antriebsriemen offenbart mit einem Belag aus erfindungsgemäß hergestellten Verbundmaterial.

Bei dem erfindungsgemäßen Verfahren werden das Textil bzw. die Gewebelage und das elastomere Material in einen Spalt zwischen einem Band und einem zylindrischen Formrad eingebracht und zwischen Band und Formrad bei einer Temperatur unterhalb der Vulkanisationstemperatur zu einem Verbundmaterial geformt, wobei das Band das Formrad über einen Umschlingungswinkel unter einem solchen Druck umschlingt, dass das elastomeren Material so in das Textil bzw. die Gewebelage eindringt, dass eine vollständige Durchdringung entsteht und die Garne des Textils bzw. der Gewebelage im

elastomeren Material vollständig eingebunden sind. Der hier erzeugte Druck liegt in einem Bereich von 2 bis 6 bar. Überraschenderweise wird durch das erfindungsgemäße Verfahren sogar Textil mit hoher Längsdehnung (Längsstretchtextil) so mit z.B. einer Kautschuk- bzw. Polymermatrix verbunden, dass die Fähigkeit zur Längsdehnung auch im Verbundmaterial im Wesentlichen erhalten bleibt, wobei das Textil vollständig in der Matrix eingebunden, d.h. mit dem Matrixmaterial verfüllt ist. Der Umschlingungswinkel um das Formrad ist je nach Verfahrensführung anpassbar und beträgt üblicherweise mehr als 180°.

Der Vorteil eines solcherart hergestellten flächigen Gewebeverbundmaterials, z.B. einer gummiertem Gewebelage, liegt darin, dass alle Garne und Zugstränge durch umgebendes elastomeres Material geschützt und in die Matrix eingebunden sind. Antriebsriemen, die mit einer solchen Gewebelage versehen sind, weisen zudem eine besonders hohe Haftung zwischen dieser Gewebelage und dem übrigen Material auf. Zum Beispiel bei Zahnriemen, die im betriebswarmen Öl laufen, ist durch das erfindungsgemäße Herstellverfahren das Textil bzw. die Gewebelage so gut geschützt, dass die Laufzeit und die Lebensdauer in solchen aggressiven Umgebungen deutlich erhöht wird.

Besonders einfach lässt sich das erfindungsgemäßen Verfahren dadurch realisieren, dass auf bestehende, bereits bekannte Fertigungseinrichtungen zurückgegriffen wird, die durch einfache Umstellungen in Ihrem Fertigungsablauf auf das beanspruchte Verfahren angepasst werden können. Vorteilhafterweise lässt sich so das Textil bzw. die Gewebelage und das elastomere Material zwischen einem Band und einem zylindrischen Formrad einer Rotationsvulkanisationseinrichtung (AUMA) einbringen und dort zu einem Verbundmaterial formen, wobei dann natürlich die Temperaturführung und Anlagedruck des Bandes so auszubilden sind, dass gerade keine Vulkanisation erfolgt, aber trotzdem eine vollständige Durchdringung des Gewebes erfolgt. Konventionelle Rotationsvulkanisationsverfahren und Vorrichtungen zur Herstellung flächiger Gewebeverbundmaterialien sind beispielsweise aus folgenden Druckschriften bekannt DE 31 49 503 A1, DE 32 35 740 A1.

Andere bekannte Rotationsvulkanisationseinrichtungen sind beispielsweise in der DE 1 931 972 A, der DE 26 55 025 C2 und der DE 10 2013 102 148 A1 offenbart, wobei dort jedoch ein Rotationsvulkanisationsverfahren beschrieben ist, bei dem extrudiertes Grundmaterial eingesetzt wird. Dort laufen zur Herstellung eines elastischen Zugmittels / Antriebsriemenrohlings während der Extrusion in einer Austrittsdüse Zugträger in das extrudierte, noch warme und relative zähflüssige Material ein. Das so entstandene noch zäh-flüssige Material mit den Zugträgern wird zwischen einem Band und einem zylindrischen Formrad unter Wärmeentzug zum fertigen Zugmittel geformt und vulkanisiert, wobei das Band das Formrad über einen Umschlingungswinkel unter Druck umschlingt. Wie bereits oben gesagt, müssen bei der Verwendung einer solchen Anlage für das erfindungsgemäße Verfahren die Temperaturführung und die Zufuhr von elastomerem Matrixmaterial so ausgelegt werden, dass das Verbundmaterial nicht vulkanisiert. Das unter Druck auf einem Formrad ablaufende Band ist aber hier wichtig und kann dazu genutzt werden, dass ein sicherer Verbund zwischen Gewebe bzw. Textil und elastomerem Material erfolgt.

Eine vorteilhafte Weiterbildung besteht darin, dass das elastomere Material eine Polymermischung, insbesondere eine Kautschukmischung ist, vorzugsweise eine lösungsmittelfreie Polymermischung bzw. Kautschukpräparation/Kautschukmischung. Es können dabei nämlich einfach hergestellte Mischungen verwendet werden, die keinerlei Lösungsmittel enthalten. Auf Lösungsmittel, die eigentlich nur für den Verbindungsprozess, d.h. nur zur Erniedrigung der Viskosität für das Einbringen des elastomeren Materials in und zwischen die Garne der Gewebelage erforderlich sind, kann dann verzichtet werden. Dies erhöht nicht nur die Arbeitssicherheit sondern ist auch aus Gründen des Umweltschutzes außerordentlich wünschenswert.

Erfindungsgemäß wird das elastomere Material als Platte zwischen Band und zylindrischen Formrad eingebracht , wobei die Platte einseitig oder beidseitig des Textils oder der Gewebelage eingebracht wird. Solche Platten können in beliebiger Weise als Vormaterial hergestellt und sehr einfach in den Fertigungsprozess integriert werden.

Eine weitere vorteilhafte Ausbildung besteht darin, dass mehrere Lagen von elastomerem Material oder von Textil bzw. Gewebe zwischen Band und zylindrischen Formrad eingebracht werden. Damit lässt sich auf einfache Weise die Zusammensetzung und die Dicke/Stärke des Verbundmaterials anpassen an die weiteren Erfordernisse der Herstellung und/oder des späteren Betriebes.

Eine weitere vorteilhafte Ausbildung besteht darin, dass die Temperatur beim Formprozess zwischen Band und Formrad 150° C nicht überschreitet, vorzugsweise 100° C nicht überschreitet, was insbesondere bei wärmesensitiven Komponenten in der Matrix sehr wichtig ist. Als "wärmesensitiv" werden solche Komponenten bezeichnet, die bei einer Prozesstemperatur von 100°C bereits mehr als 10% Vernetzungsumsatz aufweisen. Dadurch, dass die Temperatur zwischen Band und Formrad bei der Herstellung des Verbundmaterials unterhalb der genannten Grenzen bleibt, vermeidet man sicher, dass bereits während der Herstellung der Verbundmaterialien merkbare Vulkanisationseffekte auftreten.

Das Gewebeverbundmaterial, welches mit dem erfindungsgemäßen Verfahren hergestellt werden kann, eignet sich insbesondere für Antriebsriemen, vorzugsweise Zahnriemen oder auch Keilrippenriemen, die mit dem erfindungsgemäß hergestellten Gewebeverbundmaterial auf ihrer Rückseite und/oder ihrer Antriebsseite belegt sind. Wie oben bereits dargestellt, ist bei solchen Antriebsriemen, die oft im betriebswarmen Öl oder in anderen rauen Umgebungen laufen, durch das erfindungsgemäße Herstellverfahren das Textil bzw. die Gewebelage und dadurch auch der damit belegte Riemen so gut geschützt, dass die Laufzeit und die Lebensdauer in solchen aggressiven Umgebungen deutlich erhöht werden.

Zur Belegung von Antriebsriemen eignet sich besonders eine Textil- oder Gewebelage, die ein Textil mit mehr als 50% Dehnung bei einer Spannung von 100 N in Längsrichtung der Belegung aufweist, gemessen an einem Textilstreifen mit einer Breite von 5 cm. Auch bei komplizierteren Formen, wie sie beispielsweise bei Zahnriemen oder auch Keilrippenriemen vorhanden sind, lässt sich so ein Antriebsriemen gut mit einer Auflage aus einem matrixgebundenen Längsstretchtextil und damit dehnbarem Verbundmaterial herstellen bzw. belegen.

## Patentansprüche

1. Verfahren zur Herstellung eines flächigen Gewebeverbundmaterials in Form eines gummierten oder mit einer Polymerpräparation versehenen Gewebes zur Belegung von Antriebsriemen, wobei das Gewebeverbundmaterial ein in einer Matrix aus elastomerem Material eingebundenes Textil aufweist, **dadurch gekennzeichnet, dass** das Textil bzw. die Gewebelage und das elastomere Material in einen Spalt zwischen einem Band und einem zylindrischen Formrad eingebracht und zwischen Band und Formrad bei einer Temperatur unterhalb der Vulkanisationstemperatur zu einem Verbundmaterial geformt werden, wobei das Band das Formrad über einen Umschlingungswinkel unter einem Druck von 2 bis 6 bar umschlingt und wobei das elastomere Material als Platte zwischen Band und zylindrischem Formrad eingebracht wird, wobei die Platte einseitig oder beidseitig des Textils oder der Gewebelage eingebracht wird.

2. Verfahren nach Anspruch 1, bei dem das elastomere Material eine Polymermischung, insbesondere eine Kautschukmischung ist, vorzugsweise eine lösungsmittelfreie Kautschukpräparation/Kautschukmischung.

3. Verfahren nach einem der Ansprüche 1 oder 2, bei dem mehrere Lagen von elastomerem Material oder von Textil bzw. Gewebe zwischen Band und zylindrischen Formrad eingebracht werden.

4. Verfahren nach einem der Ansprüche 1 bis 3, bei dem die Temperatur beim Formprozess zwischen Band und Formrad 150° C nicht überschreitet, vorzugsweise 100° C nicht überschreitet.

5. Verfahren nach einem der Ansprüche 1 bis 4, bei dem das Textil bzw. die Gewebelage und das elastomere Material zwischen einem Band und einem zylindrischen Formrad einer Rotationsvulkanisationseinrichtung (AUMA) eingebracht und dort zu einem Verbundmaterial geformt werden.

6. Verfahren nach einem der Ansprüche 1 bis 5, bei dem die Textil- oder Gewebelage im Gewebeverbundmaterial ein Textil mit mehr als 50% Dehnung bei einer Spannung von 100 N in Längsrichtung der Belegung aufweist, gemessen an einem Textilstreifen mit einer Breite von 5 cm.

## Claims

1. Method for producing a sheet-like composite fabric material, in the form of a rubberized fabric or a fabric provided with a polymer preparation, for covering drive belts, the composite fabric material comprising a textile integrated in a matrix of elastomeric material, **characterized in that** the textile or the fabric layer and the elastomeric material are introduced into a gap between a band and a cylindrical moulding wheel and are moulded to form a composite material between the band and the moulding wheel at a temperature below the vulcanization temperature, the band looping around the moulding wheel at a looping angle under a pressure of 2 to 6 bar, and the elastomeric material being introduced between the band and the cylindrical moulding wheel as a sheet, the sheet being introduced on one side or both sides of the textile or the fabric layer.

2. Method according to Claim 1, in which the elastomeric material is a polymer mixture, in particular a rubber mixture, preferably a solvent-free rubber preparation/rubber mixture.

3. Method according to Claim 1 or 2, in which a plurality of layers of elastomeric material or of textile or fabric are introduced between the band and the cylindrical moulding wheel.

4. Method according to one of Claims 1 to 3, in which the temperature during the moulding process between the band and the moulding wheel does not exceed 150°C, preferably does not exceed 100°C.

5. Method according to one of Claims 1 to 4, in which the textile or the fabric layer and the elastomeric material are introduced between a band and a cylindrical moulding wheel of a rotary vulcanizing device (AUMA) and are moulded there to form a composite material.

6. Method according to one of Claims 1 to 5, in which the textile or fabric layer in the composite fabric material comprises a textile with over 50% elongation under a tensile stress of 100 N in the longitudinal direction of the covering, measured on a textile strip with a width of 5 cm.

## Revendications

1. Procédé de fabrication d'un matériau de tissu composite plat sous la forme d'un tissu caoutchouté ou muni d'une préparation polymère pour le revêtement de courroies de transmission, le matériau de tissu composite comprenant un textile intégré dans une matrice en matériau élastomère, **caractérisé en ce que** le textile ou la couche de tissu et le matériau élastomère sont insérés dans une fente entre une bande et une roue de formage cylindrique et formés en un matériau composite entre la bande et la roue de formage à une température inférieure à la température de vulcanisation, la bande s'enroulant autour de la roue de formage sur un angle d'enroulement sous une pression de 2 à 6 bar et le matériau élastomère étant inséré sous forme de plaque entre la bande et la roue de formage cylindrique, la plaque étant insérée d'un côté ou des deux côtés du textile ou de la couche de tissu.

2. Procédé selon la revendication 1, dans lequel le matériau élastomère est un mélange de polymère, notamment un mélange de caoutchouc, de préférence une préparation de caoutchouc/un mélange de caoutchouc sans solvant.

3. Procédé selon l'une quelconque des revendications 1 ou 2, dans lequel plusieurs couches de matériau élastomère ou de textile ou tissu sont insérées entre la bande et la roue de formage cylindrique.

4. Procédé selon l'une quelconque des revendications 1 à 3, dans lequel la température lors du processus de formage entre la bande et la roue de formage ne dépasse pas 150 °C, de préférence ne dépasse pas 100 °C.

5. Procédé selon l'une quelconque des revendications 1 à 4, dans lequel le textile ou la couche de tissu et le matériau élastomère sont insérés entre une bande et une roue de formage cylindrique d'un dispositif de vulcanisation à rotation (AUMA) et y sont formés en un matériau composite.

6. Procédé selon l'une quelconque des revendications 1 à 5, dans lequel la couche de textile ou de tissu dans le matériau de tissu composite comprend un textile présentant plus de 50 % d'allongement à une contrainte de 100 N dans la direction longitudinale du revêtement, mesuré sur un ruban de textile d'une largeur de 5 cm.
